# EUROPÄISCHE PATENTSCHRIFT

(11) **EP 0 626 215 B1**
(45) Veröffentlichungstag und Bekanntmachung des Hinweises auf die Patenterteilung: **10.12.1997**
(21) Anmeldenummer: 94106300.0
(22) Anmeldetag: 22.04.1994
(51) Int. Cl.: B09B 3/00

(54) **Verfahren und Vorrichtung zur Abscheidung flüchtiger Komponenten aus einem Grundstoff**
Method and device for separating volatile components from a material
Procédé et dispositif pour la séparation de composants volatils à partir d'un matériau

(30) Priorität: 25.05.1993 DE 4317291
(43) Veröffentlichungstag der Anmeldung: 30.11.1994
(60) Teilanmeldung: 96109147.7
(73) Patentinhaber: Umwelt-Technics-Nord GmbH, D-22851 Norderstedt (DE)
(72) Erfinder: Gronholz, Claus, Dipl.-Ing., D-22851 Norderstedt (DE)
(74) Vertreter: Patentanwälte Hauck, Graalfs, Wehnert, Döring, Siemons

(56) Entgegenhaltungen:
- EP-A- 0 156 562
- EP-A- 0 412 055
- EP-A- 0 423 039
- EP-A- 0 529 203
- DE-A- 3 314 824
- DE-A- 3 637 189
- DE-A- 3 809 115

## Beschreibung

Die Erfindung bezieht sich auf ein Verfahren zur Abscheidung flüchtiger Komponenten aus einem Grundstoff, wie zum Beispiel Bohrschlamm, Bodenmaterial usw. nach dem Oberbegriff des Patentanspruchs 1.

Bei stark kontaminierten Böden oder auch Bohrschlämmen besteht die Notwendigkeit der Dekontamination. In diesem Zusammenhang ist aus der EP-A-0 423 039 bekanntgeworden, flüchtige Komponenten enthaltende Feststoffe in eine rotierend antreibbare Trommel einzufüllen. Der Grundstoff wird in der Trommel beheizt und unter Vakuum gesetzt, so daß austretende Gase durch Kondensation abgeschieden werden können. Anschließend wird die Trommel nach einer vorgegebenen Prozeßzeit mit inertem Gas, zum Beispiel Stickstoff, gespült.

Der Erfindung liegt die Aufgabe zugrunde, ein Verfahren zum Abscheiden flüchtiger Komponenten aus einem Grundstoff anzugeben, das mit einem relativ geringen Energieaufwand wirksam arbeitet.

Diese Aufgabe wird durch die Merkmale des Patentanspruchs 1 gelöst.

Bei dem erfindungsgemäßen Verfahren wird der Grundstoff in einem gasdichten Reaktor erwärmt, und zwar mit Hilfe von Induktionserwärmung. Das Induktionsgefäß ist daher als Induktionskern ausgebildet. Der Reaktorinnenraum steht unter Vakuum, wobei ein Unterdruck von 5 bis 10 mbar, maximal bis 0,5 mbar, angestrebt ist. Aufgrund der Erwärmung und des Vakuums gelingt es, nahezu vollständig die flüchtigen Bestandteile aus dem Grundstoff auszutreiben. Der Rest wird mit Hilfe eines inerten Gases ausgespült, das in die Reaktorkammer eingeleitet, vorzugsweise in den Grundstoff injiziert wird, nachdem der Grundstoff mit Hilfe eines geeigneten Rührwerks intensiv gerührt worden ist.

Der erfindungsgemäße Reaktor zur Durchführung des erfindungsgemäßen Verfahrens sieht einen Innenraum zur Aufnahme eines Induktionsgefäßes vor, wobei mindestens eine Induktionsspule dem Reaktor zugeordnet ist. Im Inneren des Reaktors ist ein Rührwerk angeordnet, das von einem von außerhalb des Reaktors zugeführten Heizmedium, zum Beispiel thermisches Öl, durchströmbar ist und dessen in das Grundmaterial im Induktionsgefäß eintauchende Rührabschnitte mit einer Quelle für inertes Gas verbunden sind, das über feine Austrittsöffnungen in den Rührabschnitten austritt. Der Grundstoff im Induktionsgefäß, das nach einer weiteren Ausgestaltung der Erfindung vorzugsweise Kreisform hat, wird einmal durch die Induktionserwärmung des Grundgefäßes erwärmt. Das Grundgefäß kann nach einer weiteren Ausgestaltung der Erfindung in engem Wärmekontakt mit dem Boden des Reaktors stehen, der ebenfalls als Induktionskern ausgebildet sein kann. Durch die Umwälzung des Materials im Reaktionsgefäß kommt ständig andere Partien des Materials mit Boden und Wandung des Gefäßes in Berührung. Außerdem wird das Rührwerk mit Hilfe eines thermischen Öls erwärmt, so daß eine zusätzliche Erwärmung des Grundstoffes über das Rührwerk stattfindet. Diese ist insbesondere dann intensiv, wenn nach einer Ausgestaltung der Erfindung die Rührabschnitte des Rührwerks so ausgebildet sind, daß sie von oben in den Grundstoff im Induktionsgefäß eintauchen, die Rührabschnitte mit einer Platte verbunden sind, die sich von oben auf den Grundstoff auflegt, wobei die Platte mit einer aus dem Reaktor herausgeführten Hohlwelle verbunden ist, über die das Heizmedium und das inerte Gas zuführbar sind.

Da die flüchtigen Komponenten ständig entweichen, verringert sich das Volumen des Grundstoffs im Reaktionsgefäß. Um ständig eine Anlage der Platte des Rührwerks zu erhalten, muß diese entsprechend nachgeführt werden. Bei der Befüllung des Induktionsgefäßes ist daher die Höhe des eingefüllten Materials danach zu bemessen, wie hoch der Anteil der flüchtigen Komponenten ist. Dies kann durch rechtzeitige Probenentnahme vorher festgestellt werden. Wesentlich ist, daß nach dem weitgehenden Austreiben der flüchtigen Komponenten der Grundstoff im Induktionsgefäß etwa annähernd die gleiche Höhe aufweist. Dadurch ist gewährleistet, daß die Rührabschnitte stets optimal in den Grundstoff eintauchen, d.h. in relativ geringem Abstand zum Boden des Induktionsgefäßes. Daher ist die Welle des Rührwerks axial verstellbar gelagert und wird mit Hilfe eines Verstellantriebs verfahren, um das Rührwerk dem Absinken des Niveaus des Grundstoffs im Induktionsgefäß nachzuführen. Eine einfache Nachführung kann nach einer Ausgestaltung der Erfindung darin bestehen, daß der Verstellvorrichtung ein die Andruckkraft des Rührwerks messender Sensor zugeordnet ist und die Verstellvorrichtung das Rührwerk nach Maßgabe der Größe des Sensorsignals verstellt.

Die Platte und auch die Abschnitte können ebenfalls als Induktionskern dienen und zur Wärmeübertragung beitragen.

Nach einer weiteren Ausgestaltung der Erfindung ist die Wandung des Reaktorraums doppelwandig ausgeführt und so aufgebaut, daß ein mäanderartiger Strömungskanal gebildet ist, durch den das Heizmedium zu Vorwärmzwecken fließt. Der Kanal kann an den Seitenwänden und an der Decke ausgebildet sein und als Vorwärmer dienen zur Erwärmung des Heizmediums, beispielsweise thermisches Öl, das anschließend in das Rührwerk einströmt. Dadurch wird die Erwärmung der Reaktorwandung zur Erwärmung des Grundstoffes ausgenutzt. Im übrigen kann auch das Rührwerk als Induktionskern dienen und induktiv erwärmt werden. Hierzu kann eine weitere Spule vorgesehen werden, die zum Beispiel quer um den Reaktor gewickelt wird.

Wie bereits ausgeführt, ist die Höhe des Grundstoffes im Induktionsgefäß danach zu wählen, wieviel Anteile flüchtiger Komponenten sich im Grundstoff befinden. Daher sieht die Erfindung ein Dosier- und Übertragungsgefäß vor, das einen unteren Abschnitt und einen teleskopisch mit dem unteren Abschnitt zusammenwirkenden oberen Abschnitt aufweist, wobei Feststellmittel vorgesehen sind, um die Abschnitte in vorgegebener Relativlage gegeneinander festzulegen. Die Höhe des Dosier- und Übertragungsgefäßes wird danach eingestellt, wieviel Prozent Anteil flüchtiger Komponenten im Grundstoff vorhanden sind. Nach der Höheneinstellung wird das Dosier- und Übertragungsgefäß bis zum oberen Rand glatt mit dem Grundstoff aufgefüllt. Anschließend erfolgt die Befüllung des Induktionsgefäßes mit dem Material aus dem Dosier- und Übertragungsgefäß. Zu diesem Zweck kann das Dosier- und Übertragungsgefäß einen verschiebbaren Boden aufweisen, so daß das Induktionsgefäß zur Befüllung lediglich unter das Dosier- und Übertragungsgefäß gestellt werden muß, um ersteres zu befüllen.

Die Erfindung wird nachfolgend anhand von Zeichnungen näher erläutert.
- Fig. 1: zeigt im Schnitt schematisch den Aufbau eines Reaktors zur Durchführung des erfindungsgemäßen Verfahrens.
- Fig. 2: zeigt einen Schnitt durch die Seitenwand, die Decke und den Boden eines Reaktors zur Durchführung des erfindungsgemäßen Verfahrens ähnlich dem nach Fig. 1.
- Fig. 3: zeigt einen Schnitt durch die Anordnung nach Fig. 2 entlang der Linie 3-3.
- Fig. 4: zeigt schematisch ein Dosier- und Übertragungsgefäß.
- Fig. 5: zeigt die Seitenansicht des Gefäßes nach Fig. 4 beim Befüllen eines Induktionsgefäßes.

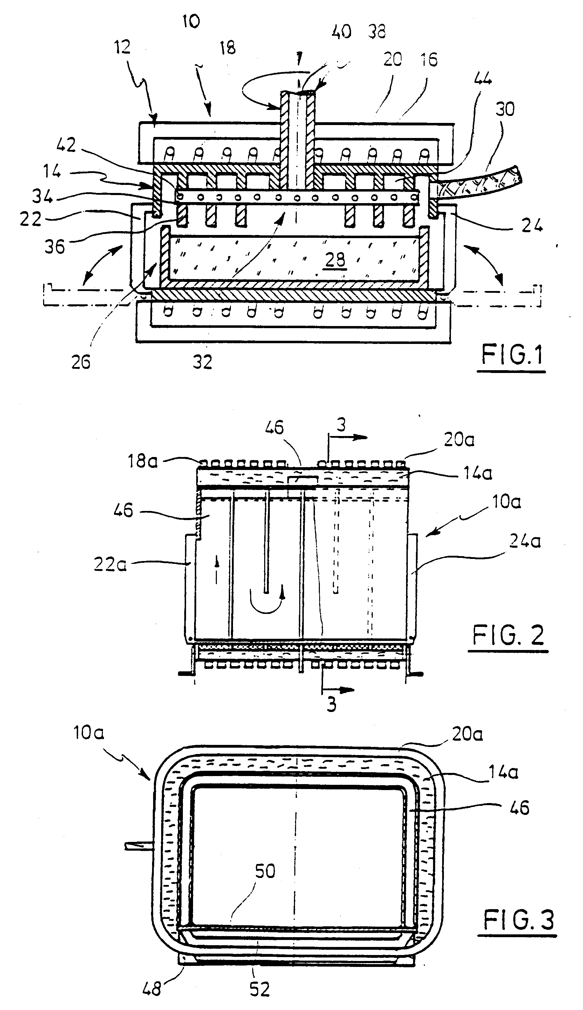

In Fig. 1 ist ein Reaktor 10 angedeutet, der einen Außenmantel 12 aufweist. Ein Innenmantel 14 besteht aus isolierendem Aufbau und läßt zum Außenmantel 12 einen Ringraum 16 frei, in dem zwei Induktorspulen 18 und 20 angeordnet sind. Die Anschlüsse der Induktorspulen 18, 20 sind nicht dargestellt.

Der Reaktor 10 hat an gegenüberliegenden Enden Klappen 22, 24, die um eine untere horizontale Achse schwenkbar sind. Die geöffnete Stellung ist strichpunktiert angedeutet. In der geöffneten Stellung kann ein topfartiges Induktionsgefäß 26 eingeschoben bzw. herausgeschoben werden. Das Induktionsgefäß 26 besteht aus einem elektrisch leitenden Material, so daß es mit Hilfe der Spulen 18, 22 erwärmt werden kann. Im Induktionsgefäß 26 befindet sich ein Grundstoff 28, der flüchtige Verunreinigungen enthält.

Der Innenmantel 14 ist mit einer Leitung 30 verbunden, die zu einer Vakuumpumpe (nicht gezeigt) führt. Im Inneren des Mantels 14 ist ein Rührwerk 32 angeordnet. Es weist eine kreisrunde Platte 34 auf, von der eine Reihe von achsparallelen Rührabschnitten 36 nach unten steht. Die Platte ist mit einer Hohlwelle 38 verbunden, die sich durch entsprechende Öffnungen im inneren Mantel 14 und im äußeren Mantel 12 hindurcherstreckt und von einem geeigneten Drehantrieb in Rotation versetzt werden kann. In der Hohlwelle 38 befindet sich ein Rohr 40, das mit einer Stickstoffquelle (nicht gezeigt) in Verbindung steht. Das Rohr 40 ist über geeignete nicht gezeigte Kanäle mit den Rührabschnitten 36 verbunden, die fein verteilte Öffnungen aufweisen zum Eintragen des Stickstoffs in den Grundstoff 28, wenn die Rührabschnitte 36 in diesen eingetaucht sind. Der Zwischenraum zwischen Hohlwelle 38 und Rohr 40 ist mit einer Quelle für thermisches Öl verbunden. Er steht außerdem in Verbindung mit Kanälen 42 im Inneren der Platte 34 und der Rührabschnitte 36, um diese auf eine ausreichende Temperatur zu erwärmen.

Innerhalb des Innenmantels 14 sind Kanäle 44 vorgesehen, durch die ebenfalls thermisches Öl strömt zur Vorerwärmung des thermischen Öls, das anschließend der Platte 34 und der Rührabschnitte 36 zugeführt wird.

Nachdem das Induktionsgefäß 26 mit dem Grundstoff 28 in den Reaktorinnenraum eingeschoben worden ist, wird das Rührwerk 32 abgesenkt, bis die Platte 34 auf der Oberseite des Grundstoffs 28 aufliegt. Hierfür ist auch eine axiale Verstellung der Welle 38 obligatorisch (nicht gezeigt). Diese erfolgt mit Hilfe eines nicht gezeigten Verstellzylinders oder dergleichen, der zum Beispiel mit einer vorgegebenen Vorspannkraft wirkt und beim Absinken des Niveaus des Grundstoffes 28 die Platte 34 nachfährt. Es kann auch ein Sensor vorgesehen sein, der die Anpreßkraft der Platte 34 mißt und das Nachfahren der Platte 34 veranlaßt, wenn die Kraft einen vorgegebenen Wert unterschreitet.

Durch Zuführung von Strom zu den Spulen 18, 20 wird das Induktionsgefäß 26 erwärmt, wobei durch Rotation des Rührwerks 32 ständig neue Bereiche des Grundstoffs 28 mit Wandung und Boden des Gefäßes 26 in wärmeaustauschenden Kontakt treten. Durch die zusätzliche Erwärmung der Platte 34 mit einem Heizmedium, zum Beispiel thermischem Öl, findet eine weitere Erwärmung des Materials statt. Im übrigen kann die Platte 34 auch als Induktionskern ausgebildet sein.

Während dieses Vorgangs wird über die Leitung 30 ständig ein Vakuum im Innenraum aufrechterhalten, beispielsweise von 5 bis 10 mbar, so daß die aus dem Grundstoff 28 austretenden flüchtigen Bestandteile ständig abgezogen werden.

Dieser Vorgang kann zum Beispiel 10 bis 15 Minuten andauern. Sobald die flüchtigen Bestandteile im wesentlichen ausgetrieben worden sind, wird in das Rohr 40 Stickstoff eingeleitet, das sich durch das warme Rührwerk 32 erwärmt und über die Rührabschnitte 36 aus- und in den Grundstoff 28 eintritt, um die restlichen flüchtigen Bestandteile herauszuspülen.

Anschließend wird der Reaktor auf Atmosphärendruck gebracht, eine Klappe 22, 24 wird geöffnet und das Induktionsgefäß 26 herausgefahren. Ein anderes Induktionsgefäß mit verunreinigtem Grundstoff wird über die andere geöffnete Klappe eingeschoben.

In den Figuren 2 und 3 ist ein ähnlicher Reaktor 10a wie in Fig. 1 dargestellt mit einem inneren Mantel 14a aus isolierendem Material, auf dem zwei Induktionsspulen 18a und 20a angeordnet sind. In Fig. 2 ist lediglich die Nabe 46a für die Wellen 38, 40 in Fig. 1 zu erkennen.

Wie aus der Zusammenschau der Figuren 2 und 3 hervorgeht, ist die Seitenwand und die Decke des Innenraums des Reaktors 10a mit einem mäanderförmigen Kanal 46 versehen, durch den Heizmedium strömen kann, um die gesamte Erwärmung an den Seitenwänden und der Decke aufzunehmen zwecks Vorerwärmung des Heizmediums, das anschließend in das Rührwerk eingetragen wird. Das Heizmedium, beispielsweise thermisches Öl, hat dabei eine Temperatur von 450°. Es tritt mit etwa 400°C in das Rührwerk 32 ein.

Wie aus Fig. 2 und 3 ferner hervorgeht, ist der Reaktor 10a durch eine untere größere Rippe 48 in zwei Hälften getrennt, wobei die Spulen 18a, 20a auf beiden Seiten der Rippe 48 angeordnet sind. Unter dem Boden 50 des Reaktorinnenraums sind kleinere Rippen 52 angeordnet. Der Boden 50 ist ebenfalls als Induktionskern zu betrachten und steht in engem Wärmekontakt mit dem Boden des Induktionsgefäßes 28 gemäß Fig. 1.

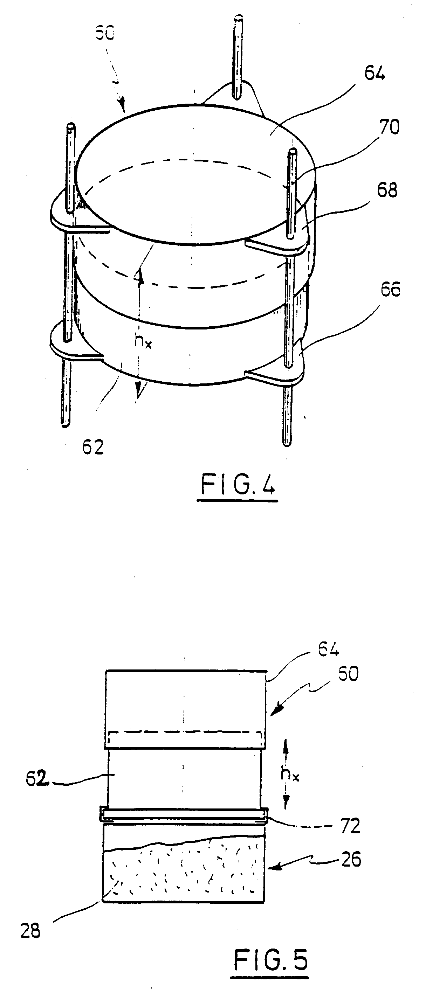

In Fig. 4 ist perspektivisch ein Dosier- und Übertragungsgefäß 60 dargestellt, das aus einem kreisförmigen unteren Abschnitt 62 und einem kreisförmigen oberen Abschnitt 64 besteht, wobei letzterer teleskopisch mit dem unteren Abschnitt 62 zusammenwirkt. An der Außenseite der Abschnitte 62, 64 sind in Umfangsabständen drei Ansätze 66, 68 angebracht, mit denen Spindeln 70 zusammenwirken, um die Abschnitte 62, 64 in vorgegebener Relativlage zueinander zu halten. Wie aus Fig. 5 zu erkennen, ist der untere Abschnitt 62 mit einem verschiebbaren Boden 72 versehen. Ein Induktionsgefäß 26 wird unterhalb des Dosier- und Übertragungsgefäßes 60 angeordnet und kann durch Wegschieben des Bodens 72 von oben über das Gefäß 60 gefüllt werden.

Vor der Befüllung des Dosier- und Übertragungsgefäßes 60 wird dieses zunächst auf eine vorgegebene Höhe hx eingestellt, wobei diese Höhe davon abhängt, wie hoch der Anteil an flüchtigen Komponenten in dem Grundstoff ist. Das Induktionsgefäß 26 wird nämlich mit dem Grundstoff so aufgefüllt, daß nach dem Austreiben der flüchtigen Komponenten das Niveau im Induktionsgefäß 26 stets annähernd konstant ist Ist die Höhe hx eingestellt, wird das Gefäß 60 von oben mit verunreinigtem Grundstoff aufgefüllt und anschließend über das Induktionsgefäß 26 gebracht bzw. letzteres unter das Gefäß 60, wonach der Boden 72 entfernt wird, damit das Gefäß 26 aufgefüllt und anschließend in den Reaktor 10 bzw. 10a eingeschoben werden kann.

Alle beschriebenen Vorgänge können automatisch ablaufen, auch das Ein- und Ausschieben des Induktionsgefäßes 26 in den bzw. aus dem Reaktor und die Einstellung der Höhe des Dosier- und Übertragungsgefäßes.

## Patentansprüche

1. Verfahren zur Abscheidung flüchtiger Komponenten aus einem Grundstoff, insbesondere aus Bohrschlamm oder Bodenmaterial, bei dem
a) der Grundstoff in einen gasdichten Raum (10) eingebracht und erhitzt wird,
b) im gasdichten Raum (10, 10a) ein Vakuum erzeugt
c) und nach einer vorgegebenen Prozeßzeit der Raum (10) mit einem inerten Gas gespült wird, **gekennzeichnet** durch folgende weitere Verfahrensschritte:
d) der Grundstoff wird in ein topfartiges Induktionsgefäß (26) eingefüllt, das in den gasdichten Raum (10, 10a) eingebracht wird;
e) die Erhitzung des Grundstoffs erfolgt in dem Gefäß (26) durch Induktionswärme und durch ein in das Gefäß (26) absenkbares, durch einen Wärmeträger erwärmtes Rührwerk (32), das den Grundstoff gleichzeitig umrührt, wobei die in den Grundstoff eintauchenden Rührwerksabschnitte (36) mit einer Platte verbunden sind, die sich von oben auf den Grundstoff auflegt; wobei ferner
f) die Füllhöhe des Grundstoffes in dem topfartigen Gefäß (26) nach vorangegangener Probenahme und Analyse des Anteils an flüchtigen Komponenten so eingestellt wurde, daß die Höhe des Grundstoffes im Gefäß (26) nach dem Austreten der flüchtigen Komponenten stets annähernd gleich ist, um die Auflage der Rührwerksplatte (34) während der gesamten Prozeßzeit zu gewährleisten.

2. Verfahren nach Anspruch 1, dadurch gekennzeichnet, daß als Spülgas Stickstoff verwendet wird.

3. Verfahren nach Anspruch 1, dadurch gekennzeichnet, daß inertes Gas in den Grundstoff injiziert wird.

4. Vorrichtung zur Durchführung des Verfahrens nach Anspruch 1 mit einem gasdichten Reaktor (10) zur Aufnahme des Grundstoffes,
dadurch **gekennzeichnet**, daß
in dem Reaktor (10, 10a) ein topfartiges Gefäß (26) vorgesehen ist,
dem Reaktor (10, 10a) mindestens eine Induktionsspule (18, 20, 18a, 20a) zugeordnet ist,
im Inneren des Reaktors (10, 10a) ein Rührwerk (32) angeordnet ist, das von einem von außerhalb des Reaktors zugeführten Heizmedium durchströmbar ist und dessen in den Grundstoff (28) im Induktionsgefäß (26) eintauchende Rührabschnitte (36) mit einer Quelle für inertes Gas verbunden sind, das über feine Austrittsöffnungen in den Rührabschnitten (36) austritt,
wobei die Rührabschnitte (36) mit einer Platte (34) verbunden sind, die von oben auf den Grundstoff auflegbar ist.

5. Vorrichtung nach Anspruch 4, dadurch gekennzeichnet, daß das Induktionsgefäß (26) kreisförmig ist.

6. Vorrichtung nach Anspruch 4, dadurch **gekennzeichnet**, daß die Platte (34) mit einer aus dem Reaktor (10, 10a) herausragenden Hohlwelle (38) verbunden ist, über die das Heizmedium und das inerte Gas zuführbar sind.

7. Vorrichtung nach Anspruch 6, dadurch gekennzeichnet, daß die Welle (38, 40) axial verstellbar gelagert und durch eine Verstellvorrichtung außerhalb des Reaktors (10) betätigbar ist.

8. Vorrichtung nach Anspruch 7, dadurch gekennzeichnet, daß der Verstellvorrichtung ein die Andruckkraft des Rührwerks (32) messender Sensor zugeordnet ist und die Verstellvorrichtung das Rührwerk (32) nach Maßgabe der Größe des Sensorsignals verstellt.

9. Vorrichtung nach einem der Ansprüche 4 bis 8, dadurch gekennzeichnet, daß die Spule (18, 20, 18a, 20a) um einen Isolationsmantel (14, 14a) herumgewickelt ist.

10. Vorrichtung nach einem der Ansprüche 4 bis 9, dadurch gekennzeichnet, daß die Wandung des Reaktorraums doppelwandig ausgeführt und so aufgebaut ist, daß ein mänderartiger Strömungskanal (46) gebildet ist, durch den das Heizmedium zu Vorwärmzwecken fließt.

11. Vorrichtung nach einem der Ansprüche 4 bis 10, dadurch gekennzeichnet, daß auch der Boden (50) des Reaktors (10a) als Induktionskern ausgebildet ist.

12. Vorrichtung nach einem der Ansprüche 9 bis 12, dadurch gekennzeichnet, daß zwei Induktionsspulen (18, 20, 18a, 20a) beidseits der Hohlwelle (38) für das Rührwerk (32) vorgesehen sind.

13. Vorrichtung nach einem der Ansprüche 4 bis 12, dadurch gekennzeichnet, daß eine weitere Induktionsspule am Reaktor angeordnet ist zur Erwärmung des Rührwerks.

14. Vorrichtung nach einem der Ansprüche 4 bis 13, dadurch gekennzeichnet, daß ein Dosier- und Übertragungsgefäß (60) vorgesehen ist, das einen unteren Abschnitt (62) und einen teleskopisch mit dem unteren Abschnitt (62) zusammenwirkenden oberen Abschnitt (64) aufweist, wobei Feststellmittel (70) vorgesehen sind, um die Abschnitte (62, 64) in vorgegebener Relativposition gegeneinander festzulegen.

15. Vorrichtung nach Anspruch 14, dadurch gekennzeichnet, daß der Boden (72) des unteren Abschnitts (62) als verschiebbare Platte ausgebildet ist.

## Claims

1. A method for separating volatile components from a base material, particularly drilling mud or soil material, wherein
a) the base material is brought into a gas-tight space (10) and heated,
b) a vacuum is generated within said gas-tight space (10, 10a),
c) and the space (10) is swept with an inert gas after a given processing time,
characterized by the following further method steps:
d) the base material is filled into a pot-like induction vessel (26), which is brought into the gas-tight space (10, 10a);
e) said heating of the base material is carried out by inductive heat in the vessel (26) and by astirring device (32), which can be lowered into the vessel (26), and is heated by a heat carrier, and which stirs the base material at the same time, wherein the sections (36) of the stirring device being immersed into the base material are connected with a plate which is lowering onto the base material; wherein further
f) after having taken samples and after analysis of the content of volatile components, filling height of the base material is adjusted such that height of the base material in the vessel (26) is substantially constant after emerging of the volatile components, for assuring the plate (34) of the stirring device to be lying in contact during the whole processing time.

2. The method according to claim 1, characterized in that nitrogen is used as sweeping gas.

3. The method according to claim 1, characterized in that inert gas is injected into the base material.

4. A device for carrying out the method according to claim 1 having a gas-tight reactor (10) receiving the base material,
characterized in that
a pot-like vessel (26) is provided in the reactor (10, 10a),
an inductive coil (18, 20, 18a, 20a) is associated to the reactor (10, 10a),
a stirring device (32) is arranged inside the reactor (10, 10a), which device is perfusable by a heating medium being supplied from outside the reactor and the stirring sections (36) of which device being immersed into the base material (28) in the induction vessel (26) are in correspondence with a source of inert gas, which emerges from fine emerging openings in the stirring sections (36), wherein the stirring sections (36) are in correspondence with a plate (34), which can be lowered onto the ground material.

5. The device according to claim 4, characterized in that the induction vessel (26) is circular.

6. The device according to claim 4, characterized in that the plate (34) is in correspondence with a hollow shank (38) protruding from the reactor (10, 10a), by which shank the heating medium and the inert gas can be supplied.

7. The device according to claim 6, characterized in that the shank (38, 40) is supported axially adjustable and can be actuated by an adjusting means outside the reactor (10).

8. The device according to claim 7, characterized in that the transducer measuring the contact force of the stirring device (32) is associated to the adjusting means, and the adjusting means is adjusting the stirring device (32) according to the magnitude of the transducer signal.

9. The device according to one of the claims 4 to 8, characterized in that the coil (18, 20, 18a, 20a) is wound around an isolating coating (14, 14a).

10. The device according to claims 4 to 9, characterized in that the wall of the reactor space is double-walled and constructed such that a meander-like streaming channel (46) is formed, through which the heating medium is flowing for pre-heating.

11. The device according to claims 4 to 10, characterized in that also the bottom (50) of the reactor (10a) is formed as inductive core.

12. The device according to claims 9 to 12, characterized in that two inductive coils (18, 20, 18a, 20a) are provided on both sides of the hollow shank (38) for the stirring device (32).

13. The device according to one of the claims 4 to 12, characterized in that an additional inductive coil is arranged at the reactor for pre-heating of the stirring device.

14. The device according to one of the claims 4 to 13, characterized in that a dosing and transfer vessel (60) is provided having a lower section (62) and an upper section (64) telescopically co-operating with the lower section (62), wherein fastening means (70) are provided for securing the sections (62, 64) in a given position relative to each other.

15. The device according to claim 14, characterized in that the bottom (72) of the lower section (62) is formed as a shiftable plate.

## Revendications

1. Procédé de séparation de composants volatils d'un matériau de base, en particulier de boue de forage ou de matériau du sol, dans lequel
a) le matériau de base est introduit dans une chambre étanche aux gaz (10) et y est chauffé,
b) le vide est réalisé dans la chambre étanche aux gaz (10),
c) et, après un temps d'opération prédéfini, la chambre (10) est balayée par un gaz inerte, caractérisé par les étapes supplémentaires suivantes de procédé:
d) le matériau de base est placé dans un récipient à induction (26) en forme de pot, qui est introduit dans la chambre étanche aux gaz (10, 10a),
e) le chauffage du matériau de base se fait, dans le récipient (26), par de la chaleur produite par induction et par un agitateur (32) abaissable, qui est chauffé par un fluide caloporteur, et qui brasse, en même temps, le matériau de base, les éléments (36) de l'agitateur plongeant dans le matériau de base étant reliés à une plaque qui se pose, depuis le haut, sur le matériau de base,
f) la hauteur de remplissage du matériau de base dans le récipient (26) en forme de pot ayant, de plus, été réglée, d'après une prise d'échantillon antérieure et une analyse de la teneur en composants volatils, de telle façon que la hauteur du matériau de base dans le récipient (26) soit environ constamment la même, après l'évacuation des composants volatils, pour assurer l'assise de la plaque d'agitateur (37) pendant toute la durée du procédé.

2. Procédé suivant la revendication 1, caractérisé en ce qu'on utilise de l'azote comme gaz de balayage.

3. Procédé suivant la revendication 1, caractérisé en ce que du gaz inerte est injecté dans le matériau de base.

4. Dispositif pour la mise en oeuvre du procédé suivant la revendication 1, comportant un réacteur (10) étanche aux gaz pour recevoir le matériau de base, caractérisé en ce que
- dans le réacteur (10, 10a), est prévu un récipient (26) en forme de pot,
- au réacteur (10, 10a), est associée au moins une bobine d'induction (18, 20, 18a, 20a),
- à l'intérieur du réacteur (10, 10a), est disposé un agitateur (32) qui peut être traversé par un courant de fluide de chauffe amené depuis l'extérieur du réacteur, et dont des éléments (36) d'agitateur plongeant dans le matériau de base situé dans le récipient à induction (26) sont reliés à une source de gaz inerte qui sort par de fines ouvertures de sortie situées dans les éléments (36) d'agitateur,
- les éléments (36) d'agitateur étant reliés à une plaque (34) qui peut être déposée, depuis le haut, sur le matériau de base.

5. Dispositif suivant la revendication 4, caractérisé en ce que le récipient à induction (26) est circulaire.

6. Dispositif suivant la revendication 4, caractérisé en ce que la plaque (34) est reliée à un arbre creux (38), qui dépasse du réacteur (10, 10a) et par lequel peuvent être amenés le fluide de chauffe et le gaz inerte.

7. Dispositif suivant la revendication 6, caractérisé en ce que l'arbre (38, 40) est monté de façon à pouvoir être déplacé axialement et être actionné par un dispositif de positionnement situé en dehors du réacteur (10).

8. Dispositif suivant la revendication 7, caractérisé en ce qu'au dispositif de positionnement est associé un détecteur mesurant la force d'application de l'agitateur (32) et en ce que le dispositif de positionnement déplace l'agitateur (32) en fonction de la grandeur mesurée du signal du détecteur.

9. Dispositif suivant l'une des revendications 4 à 8, caractérisé en ce que la bobine d'induction (18, 20, 18a, 20a) est enroulée autour d'une enveloppe d'isolation (14, 14a).

10. Dispositif suivant l'une des revendications 4 à 9, caractérisé en ce que la paroi de la chambre du réacteur est réalisée double et est construite de façon à réaliser un canal d'écoulement (46) présentant des méandres, par lequel passe le fluide de chauffe pour réaliser un préchauffage.

11. Dispositif suivant l'une des revendications 4 à 10, caractérisé en ce que le fond (50) du réacteur (10a) est également réalisé sous la forme d'un noyau à induction.

12. Dispositif suivant l'une des revendications 9 à 12, caractérisé en ce que deux bobines d'induction (18, 20, 18a, 20a) sont prévues des deux côtés de l'arbre creux (38) destiné à l'agitateur (32).

13. Dispositif suivant l'une des revendications 4 à 12, caractérisé en ce qu'une autre bobine d'induction est disposée sur le réacteur pour chauffer l'agitateur.

14. Dispositif suivant l'une des revendications 4 à 13, caractérisé en ce qu'il est prévu un récipient de dosage et de transfert (60), qui présente une partie inférieure (62) et une partie supérieure (64) coopérant de façon télescopique avec la partie inférieure (62), un moyen de blocage étant prévu pour bloquer l'une par rapport à l'autre les parties (62, 64) dans une position relative prédéfinie.

15. Dispositif suivant la revendication 14, caractérisé en ce que le fond (72) de la partie inférieure (62) est réalisé sous la forme d'une plaque coulissante.
